# EUROPÄISCHE PATENTANMELDUNG

(11) **EP 1 492 118 A2**
(43) Veröffentlichungstag der Anmeldung: **29.12.2004**
(21) Anmeldenummer: 04014445.3
(22) Anmeldetag: 21.06.2004
(51) Int. Cl.: G11B 33/04

(54) **Zuschnitt für CD-Hülle**

(30) Priorität: 12.12.2003 DE 10358206; 24.06.2003 DE 10328160
(71) Anmelder: Yavirat, Parichat, 22043 Hamburg (DE)
(72) Erfinder: Yavirat, Parichat, 22043 Hamburg (DE)
(74) Vertreter: Dinné, Erlend

(57) **Zusammenfassung**

Die Erfindung betrifft einen Zuschnitt für eine CD-Hülle, in die eine, zwei oder mehr CDs eingesteckt und in Zeitschriften o. dergl. dem Verbraucher angeboten werden können.

## Beschreibung

Die Erfindung betrifft einen Zuschnitt für eine CD-Hülle, in die eine, zwei oder mehr CDs eingesteckt und in Zeitschriften o. dergl. dem Verbraucher angeboten werden können.

Es sind CD-Hüllen bekannt, in die eine CD seitlich eingesteckt werden kann, wobei über die seitliche Öffnung eine daran angeordnete Lasche geklebt wird. Die so bestückte Hülle wird dann in eine Zeitschrift o. dergl. eingeklebt und der Käufer der Zeitschrift kann daraus dann die CD entnehmen. Dann aber fehlt ihm eine geeignete Hülle für diese CD, denn die Hülle, in der sie in der Zeitschrift eingeklebt war, ist oftmals beim Herausreißen beschädigt, und auch der an der Verschlusslasche befindliche Kleber kann die CD beim Herausnehmen und Einstecken leicht verunreinigen. Und auch beim Aufbewahren einer solchen CD in dieser Hülle, etwa in einem Regal mit anderen CDs zusammen senkrecht nebeneinander gestellt, hat der Käufer den Nachteil, diese spezielle CD nicht von den anderen ausreichend unterscheiden zu können.

Es sind auch bereits zu solchen eingeklebten CDs zusätzliche Schnittmuster bekannt, die zu einer solchen CD gelegt werden, die der Käufer sich dann aber selbst zuschneiden und falten muss, und die dennoch keine angemessene Hülle für eine teure CD liefern.

Ein weiterer Nachteil bei den bisher in Zeitschriften verwendeten CD-Hüllen ist, dass der Käufer die Hülle oftmals leer vorfindet, die CD fehlt, ist herausgefallen oder gestohlen. Die Klebelasche ist allzu leicht zu öffnen, eine Diebstahlsicherung oder auch eine Sicherheit vor Manipulationen an der CD ist nicht gegeben.

Aus US 5.638.953 sind Zuschnitte für CD-Hüllen bekannt, die in Zeitschriften o. dergl. eingeheftet werden sollen, die jedoch CD-Hüllen ergeben, die nicht dem Standardformat entsprechen. Die sich ergebende Hülle weist seitlich überstehende Bereiche auf, die sich durch verschiedene Ausformung von Vorder- und Rückseite ergeben. Zudem wird eine eingelegte CD nur in Teilbereichen seitlich gesichert.

Aufgabe der Erfindung war es, hier Abhilfe zu schaffen, also eine CD-Hülle bzw. einen Zuschnitt dafür zu schaffen, der einerseits einfach zu fertigen und anzuwenden ist, der aber andererseits die Nachteile des Standes der Technik nicht oder zumindest nicht in dem Maße aufweist und eine ansprechende Hülle für die spätere Aufbewahrung einer CD mit Wiedererkennungsmöglichkeit bietet.

Gelöst wird diese Aufgabe durch einen Zuschnitt, wie er näher in den Ansprüchen gekennzeichnet ist. Auf die Ansprüche wird ausdrücklich Bezug genommen.

Damit betrifft die Erfindung einen flachen, einstückigen Zuschnitt (1) für eine CD-Hülle, gekennzeichnet durch
a) einen Befestigungsabschnitt (2), daran anschließend
b) einen über eine Perforation (3) mit diesem verbundenen quadratischen, ersten Verpackungsabschnitt (4), der geringfügig größer ist als eine darauf gelegte CD, und daran anschließend
c) einen über einen Falz (5) mit diesem verbundenen quadratischen, zweiten Verpackungsabschnitt (6), der gleich groß wie der erste Verpackungsabschnitt (4) ist und dafür vorgesehen ist, dass auf ihn eine CD gelegt wird, und daran anschließend
d) einen über einen Falz/perforation (7) mit diesem verbundenen Endabschnitt (8), wobei
e) der Befestigungsabschnitt (2), der erste Verpackungsabschnitt (4), der zweite Verpackungsabschnitt (6) und der Endabschnitt (8) in derselben Richtung (X-Achse) angeordnet sind,
f) der Endabschnitt (8) in dieser Richtung (X-Achse) kleiner oder gleich groß wie der Befestigungsabschnitt (2) ist, und
g) der zweite Verpackungsabschnitt (6) an seinen beiden anderen, einander gegenüberliegenden Seiten (in Richtung Y-Achse) je eine, über einen Falz (9) mit diesem verbundene, schmale Lasche (10) aufweist, und
h) die beiden Laschen (10) derart um den an sie angrenzenden Falz (9) umlegbar ausgebildet sind, dass sie eine auf den zweiten Verpackungsabschnitt (6) gelegte CD teilweise übergreifen und ihrerseits im umgelegten Zustand von dem darauf umzulegenden ersten Verpackungsabschnitt (4) übergriffen werden und mit diesem verklebbar ausgebildet sind, wobei
i) der Endabschnitt (8) auf den Befestigungsabschnitt (2) zu liegen kommt und mit diesem verklebbar ausgebildet ist.

Wesentlich für die vorliegende Erfindung und gewissermaßen ihre Urzelle ist der Teil des Zuschnitts, der durch den ersten Verpackungsabschnitt 4, den zweiten Verpackungsabschnitt 6 (mit Laschen 10) und den Endabschnitt 8 gebildet wird, der dann auf den Befestigungsabschnitt 2 zu liegen kommt und mit diesem verklebt wird, worauf schlussendlich die so ausgebildete CD Hülle mit der darin befindlichen CD über die Perforation 3 + Falz/Perforation 7 abtrennbar bzw. abreißbar ist. Diese Urzelle ist allen Ausführungsformen der Erfindung gemeinsam.

Bevorzugt besteht der Zuschnitt aus Papier oder Pappe (Kartonage) und ist bedruckbar.

Weiterhin bevorzugt weist der Zuschnitt einen zweiten Zuschnitt (11) für eine zweite CD-Hülle auf, der dem Zuschnitt (1) in Ausgestaltung und Dimensionen gleicht und mit diesem über der mittigen X-Achse symmetrisch ist, wobei der zweite Zuschnitt (11) entsprechend dem ersten Zuschnitt (1) einen Befestigungsabschnitt (2'), einen ersten Verpackungsabschnitt (4'), einen zweiten Verpackungsabschnitt (6') und einen Endabschnitt (8') aufweist, wie im Zuschnitt (1) verbunden über Perforation (3'), Falz (5') und Falz/Perforation (7'), sowie Laschen (10') über Falze (9'), wobei die ersten Verpackungsabschnitte (4, 4') über ein Zwischenstück (17) seitlich (in Richtung Y-Achse) jeweils
über eine Perforation (12, 12') trennbar miteinander verbunden sind.

Weiterhin bevorzugt entspricht das Zwischenstück in seiner Breite (in Richtung Y-Achse) der zusammengenommenen Breite (in Richtung Y-Achse) zweier Laschen (10, 10').

Weiterhin bevorzugt sind die Befestigungsabschnitte (2,2') als gemeinsamer Befestigungsabschnitt (2") ausgebildet, der sich einstückig über die gesamte Breite (in Richtung Y-Achse) des gesamten Zuschnitts (1, 1') erstreckt, also über die Breite des ersten Verpackungsabschnitts (4), des Zwischenstücks (17) und des ersten Verpackungsabschnitt (4'), mit diesen verbunden über Perforationen (3, 3', 3").

Weiterhin bevorzugt ist der Zuschnitt (1) zur Aufnahme einer oder zwei weiterer CDs ausgestaltet, insgesamt also zur Aufnahme von drei oder vier CDs, indem anschließend an den Befestigungsabschnitt (2) in Richtung der X-Achse und damit gegenüberliegend zu einem ersten und zweiten Befestigungsabschnitt (4, 4', 6, 6') ein bzw. zwei weitere solche Verpackungsabschnitte (4, 6) vorgesehen sind, die in ihrer Ausgestaltung den gegenüberliegenden (4, 6 bzw. 4', 6') symmetrisch gleichen.

Weiterhin bevorzugt ist im ersten Verpackungsabschnitt (4, 4') und angrenzend an die Perforation (3, 3') ein Fingerloch (13, 13') vorgesehen, durch das die CD im verpackten Zustand greifbar ist.

Weiterhin bevorzugt ist im Zwischenstück (11) an seiner an die Laschen (10, 10') angrenzenden Seite ein Fingerloch (14) vorgesehen, durch das das Zwischenstück (17) im verpackten Zustand greifbar ist.

Weiterhin bevorzugt ist an einer Seite (in Richtung Y-Achse) des ersten Verpackungsabschnitts (4) ein abtrennbarer Abschnitt (15) - insb. als Postkarte - vorgesehen, der über eine Perforation (16) mit dem Verpackungsabschnitts (4) verbunden ist.

Weiterhin bevorzugt ist der Befestigungsabschnitt (2, 2') zum Einbinden, Einheften oder Einlegen einer Zeitschrift ausgebildet.

Weiterhin bevorzugt ist der Befestigungsabschnitt (2, 2') in Richtung der X-Achse größer und in einen Zeitschriftenrücken einsteckbar ausgebildet und ggf. mit einem Falz (18) parallel zur Perforation (3) versehen, der im Zeitschriftenrücken platzierbar ist.

Weiterhin bevorzugt ist der Befestigungsabschnitt (2, 2') parallel zur Perforation (3) mit einem Falz (18) versehen, der im Zeitschriftenrücken platzierbar ist, wobei sich an den Befestigungsabschnitt (2, 2') symmetrisch zum ersten und zweiten Verpackungsabschnitt (4, 6 bzw. 4', 6') ein oder zwei weitere erste und zweite Verpackungsabschnitte anschließen, wobei der Falz (18) für jeweils ein Paar erste und zweite Befestigungsabschnitte (4, 4', 6, 6') eine Symmetrieachse bildet.

Das Material für einen erfindungsgemäßen Zuschnitt ist an sich bekannt. Geeignet sind z.B. dickere Papiere, etwa 120g/m² und mehr, vor allem aber dünnerer Karton, wie er für Kartonnagen und derartige Zuschnitte für Verpackungen verwendet wird. Auch der verwendete Leim ist an sich bekannt und wird weit verbreitet bei derartigen Kartonnagen verwendet.

Beim Einbinden oder Einheften in eine Zeitschrift wird der Befestigungsabschnitt zwischen zwei Seiten einer Zeitschrift in diese eingebunden bzw. mit Heftklammern eingeheftet, wie auch dies weit verbreitet ist. Die mit der CD bestückte Hülle liegt dann für den Käufer der Zeitschrift so vor, dass, wenn er die Zeitschrift an dieser Stelle öffnet und vor sich legt, der Befestigungsabschnitt im Zeitschriftenrücken fixiert ist und die Hülle sich seitlich davon erstreckt, leicht mit der Hand erfasst und entlang der Perforation, die den Befestigungsabschnitt vom ersten Verpackungsabschnitt und damit von der gesamten CD-Hülle trennt, herausgerissen werden kann. Dabei wird die darin befindliche CD erstmals zugänglich, eine zuvor an der CD erfolgte Manipulation wäre an dem erfindungsgemäßen Zuschnitt leicht zu erkennen, und ein Diebstahl der CD ist ohne Beschädigung des Zuschnitts nicht möglich.

Es ist auch möglich, den Zuschnitt nicht einzubinden (z.B. mittels Leimbindung) oder einzuheften (z.B. mit Heftklammern), sondern den Befestigungsabschnitt etwas größer auszubilden, ihn zu falten (ein Falz kann dazu vorgesehen sein) und in an sich bekannter Weise so in eine Zeitschrift o. dergl. einzulegen, dass der Zuschnitt durch den Befestigungsabschnitt in die Zeitschrift im Bereich zwischen zwei Heftklammern eingesteckt ist und seitlich aus dieser herausgezogen werden kann. Der Käufer kann dann- oder auch ohne den Zuschnitt herauszuziehen -, wie zuvor, die CD-Hülle aufreißen.

Hält der Käufer nun die Hülle mit der CD in der Hand, so kann er die CD daraus leicht über ein Fingerloch erfassen, herausziehen und ohne durch einen Kleber beeinträchtigt zu sein, auch leicht wieder in die Hülle schieben. Beim Aufbewahren neben einer Vielzahl anderer CDs kann eine geeignete Bedruckung - neben anderen Bereichen des Zuschnitts mit Informationen zu der CD - auch des bei der Faltung des Zuschnitts sich ergebenden Rückens der CD-Hülle der Käufer diese von anderen CD-Hüllen in seinem Regal unterscheiden und erkennen.

Alle Einzelheiten, die für einen Zuschnitt für nur eine CD beschrieben sind, gelten sinngemäß auch für einen Zuschnitt für zwei, drei oder vier CDs, und umgekehrt. Bevorzugt sind achsensymmetrische Zuschnitte, ausgenommen solche mit abtrennbaren Abschnitten 15 und ggf. Seitenstücken 20.

In den Figuren sind Ausführungsbeispiele erfindungsgemäßer Zuschnitte dargestellt. Es zeigen:
- Figur 1 : eine schematische Draufsicht auf einen Zuschnitt für eine CD.
- Figur 2 : eine schematische Draufsicht auf einen anderen Zuschnitt für zwei CDs.
- Figur 3 : eine schematische Draufsicht auf einen anderen Zuschnitt für zwei CDs.
- Figur 4 : eine schematische Draufsicht auf einen anderen Zuschnitt für eine CD.
- Figur 5: eine schematische Draufsicht auf einen anderen Zuschnitt für drei CDs.
- Figur 6: eine schematische Draufsicht auf einen anderen Zuschnitt für vier CDs.

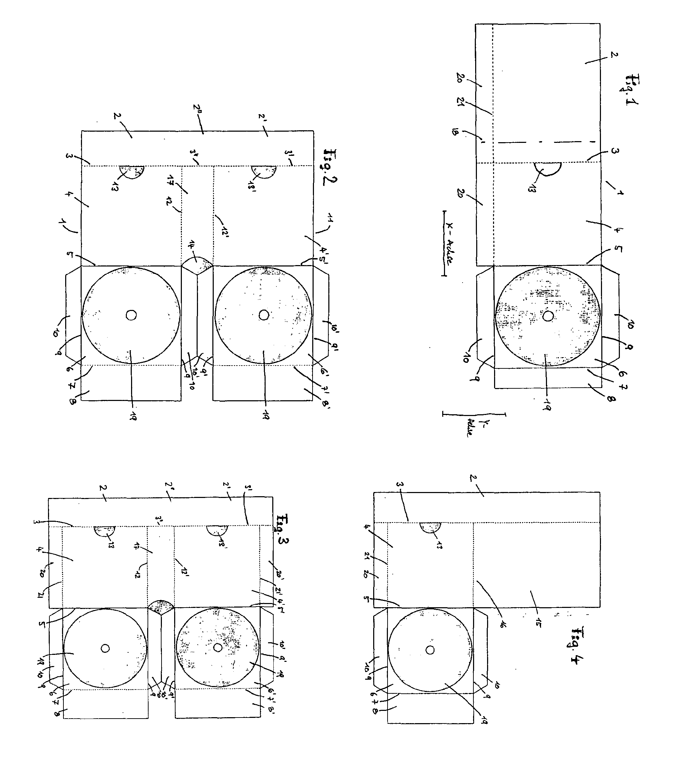

Im Einzelnen zeigt Figur 1 einen Zuschnitt 1 mit einem Befestigungsabschnitt 2, der in diesem Fall, anders als gemäß den Figuren 2-4, in Richtung der X-Achse verlängert ausgebildet ist und um einen Falz 18 knickbar ist, sodass der Zuschnitt so in den Rücken einer Zeitschrift eingelegt werden kann, wobei der Falz 18 im Rücken der Zeitschrift zu liegen kommt. Über eine Perforation 3 ist der Befestigungsabschnitt 2 mit einem ersten Verpackungsabschnitt 4 verbunden, der im Bereich der Perforation 3 ein Fingerloch 13 aufweist, durch dass eine in den zusammengefalteten und verklebten Zuschnitt 1 eingelegte CD ergriffen werden kann. An den ersten Verpackungsabschnitt 4 schließt über einen Falz 5 ein zweiter Verpackungsabschnitt 6 an, der gleich groß wie der erste Verpackungsabschnitt 4 ist. An diesen wiederum schließt über einen Falz (etwa bei Papier) bzw. bevorzugt eine Perforation (insb. bei Karton) 7 ein Endabschnitt 8 an, all dies in Richtung X-Achse, währen in Richtung Y-Achse an beiden Seiten des zweiten Verpackungsabschnitts 6 jeweils über einen Falz 9 eine Lasche 10 angeordnet ist. Legt man eine CD auf den zweiten Verpackungsabschnitt 6, so kann man nun die beiden Laschen 10 über die CD 19 falten, wobei die Laschen 10 auf der nun der CD gegenüberliegenden Seite entweder bereits mit Leim, Kontaktkleber o. dergl. ausgerüstet sind oder nun so ausgerüstet werden. Darauf kann der erste Verpackungsabschnitt 4 seinerseits über die CD 19 gefaltet werden, wobei der Endabschnitt 8 auf einen Teil des Befestigungsabschnitts 2 zu liegen kommt, der in diesem Bereich wie die Laschen 10 Kleber trägt oder damit ausgerüstet wird; alternativ kann auch der Endabschnitt 8 mit Kleber versehen sein oder werden. Der Zuschnitt 1 wird damit so über der CD 19 gefaltet und verklebt, dass die CD sicher vor Beschädigung und Diebstahl verschlossen ist. Nun kann dieser bestückte Zuschnitt 1 mittel des Befestigungsabschnitts 2 in eine Zeitschrift eingelegt werden.

Der Käufer einer solchen Zeitschrift kann durch Aufreißen der Perforation 3 ― wobei auch der Falz bzw. die Perforation 7 mit aufgerissen wird - die so ausgebildete CD-Hülle mit der darin befindlichen CD entnehmen - das Fingerloch 13 erleichtert das Ergreifen - und auch wieder in die Hülle einstecken. Vorteilhaft ist der Zuschnitt so bedruckt, dass die CD-Hülle unter ihresgleichen leicht und insb. an ihrem Rücken erkannt werden kann.

Im Bereich von Befestigungsabschnitt 2 und erstem Verpackungsabschnitt 4 sind einseitig und in Richtung der Y-Achse über eine Perforation 21 je ein Seitenstück 20 vorgesehen, derart dass der Zuschnitt 1 auf diese Weise eine gerade Außenbegrenzung durch die Seitenstücke 20 und die Lasche 10 aufweist. Dies erleichtert das korrekte Einlegen in eine Zeitschrift, ggf. auch ein Glatt-Schneiden der Oberkante der Zeitschrift, wobei beim Aufreißen der Perforation 3 zum Entnehmen der CD in ihrer Hülle dann auch das verbliebene Seitenstück 20 über die Perforation 21 abgerissen wird.

Figur 2 zeigt einen Zuschnitt 1 für zwei CDs, symmetrisch verdoppelt im Vergleich zu Figur 1 durch einen weiteren Zuschnitt 11, mit zwei Befestigungsabschnitten 2, 2', die über ein Zwischenstück 17 miteinander verbunden sind, an dem sich ein Fingerloch 14 befindet, um das Zwischenstück 17 leicht Ergreifen und über die Perforationen 12, 12' und 3" abreißen zu können. Der Befestigungsabschnitt 2 erstreckt sich als Befestigungsabschnitte 2, 2' bzw. als (Gesamt-) Befestigungsabschnitt 2" über die gesamte Höhe (Y-Achse) des Zuschnitts 1,11. Im Übrigen weist der Zuschnitt 1,11 die Merkmale gemäß Figur 1 auf, jeweils doppelt und in der Zeichnung als 3,3', 4,4' u.s.w. bezeichnet, sodass auf das zu Figur 1 Gesagte Bezug genommen werden kann. Figur zeigt somit einen Zuschnitt 1 mit Befestigungsabschnitten 2, 2', 2", Perforation 3, 3', 3", ersten Verpackungsabschnitten 4, 4', Falz 5, 5', zweiten Verpackungsabschnitten 6, 6', Falz/Perforation 7, 7', Endabschnitten 8, 8', Falz 9, 9', Laschen 10, 10', dem mit 11 bezeichneten zweiten Zuschnitt, der mit Zuschnitt 1 eine Einheit bildet und zur Aufnahme einer zweiten CD dient, mit Perforationen 12, 12', Fingerlöchern 13, 13' und 14, Zwischenstück 17 und zwei CDs 19.

Mit der in Richtung der X-Achse äußeren Kante des Befestigungsabschnitt 2" kann der gefaltete und mit einer CD bestückte Zuschnitt 1,11 in den Rücken einer Zeitschrift eingebunden werden. Die Entnahme der CDs u.s.w. erfolgt dann wie gemäß Figur 1, die Perforationen 3, 3', 3" und Falz/Perforation 7, 7' werden aufgerissen, wobei dann zwei CDs in zwei Hüllen vorliegen.

Figur 3 zeigt einen Zuschnitt, der dem von Figur 2 entspricht, zusätzlich aber über eine Perforation 21 mit Seitenstücken 20 ausgestattet ist. Dazu kann auf Figur 1 Bezug genommen werden, incl. das spätere Abreißen dieser Seitenstücke 20.

In Figur 4 ist ein Zuschnitt dargestellt, der Figur 1 entspricht, zusätzlich jedoch über eine Perforation 16 seitlich - dem Seitenstück 20 gegenüber - mit einem abtrennbaren Abschnitt 16 versehen ist, der etwa als Postkarte ausgebildet sein kann, zusammen mit der CD und ihrer Hülle über die Perforation 3 + Falz/Perforation 7 abgerissen werden kann, und von dieser wiederum über die Perforation 16 getrennt, beschrieben und versandt werden kann. Im Übrigen wird auf Figur 1 verwiesen.

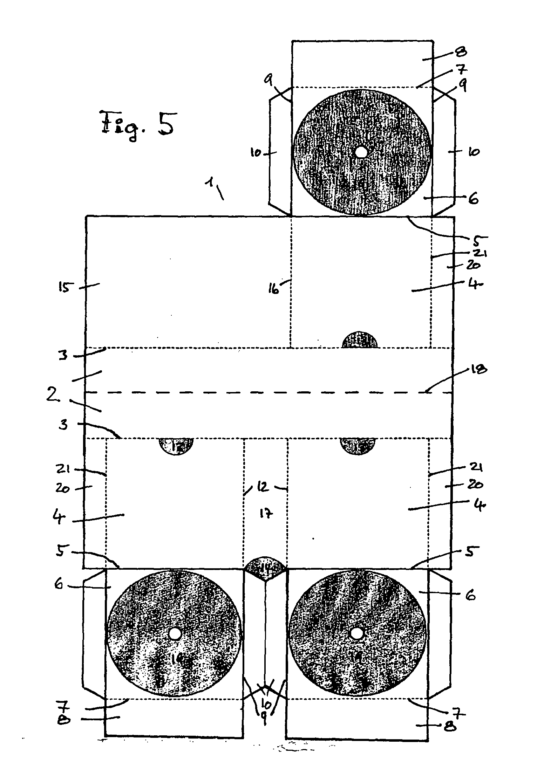

Figur 5 zeigt einen Zuschnitt 1 für drei CDs, mit Befestigungsabschnitt 2 und Falz 18, Perforationen 3, ersten Verpackungsabschnitten 4, Falzen 5, zweiten Verpackungsabschnitten 6, Falzen/Perforationen 7 und Endabschnitten 8, sowie Falzen 9 und Laschen 10, Zwischenstück 17 mit Perforationen 12, Fingerlöchern 13 und 14, einem abtrennbaren Abschnitt 15 mit Perforation 16, Seitenstück 20 mit Perforation 21, sowie drei CDs. Verpackt, verklebt und aufgerissen wird wie zuvor; drei CD Hüllen mit CDs und eine Postkarte o.dergl. werden erhalten.

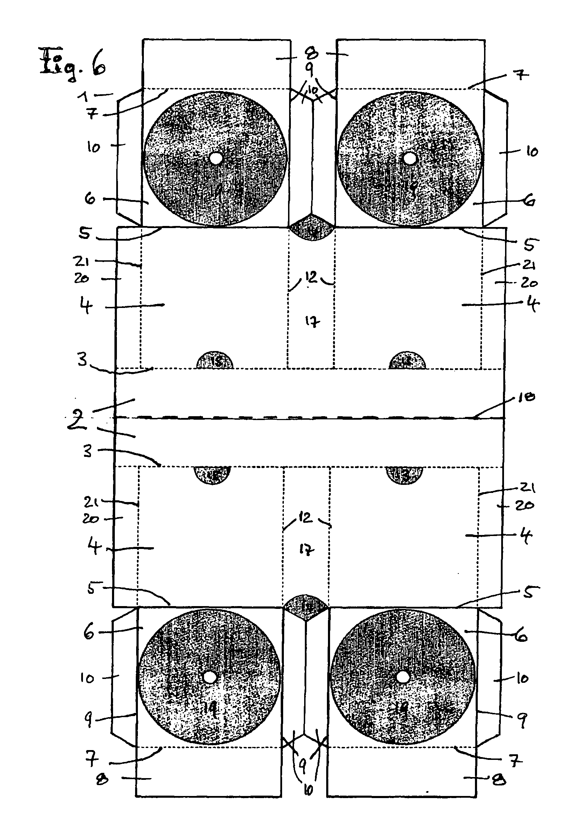

Figur 6 zeigt einen Zuschnitt 1 für vier CDs, mit Befestigungsabschnitt 2 und Falz 18, Perforationen 3, ersten Verpackungsabschnitten 4, Falzen 5, zweiten Verpackungsabschnitten 6, Falzen/Perforationen 7 und Endabschnitten 8, sowie Falzen 9 und Laschen 10, Zwischenstücken 17 mit Perforationen 12, Fingerlöchern 13 und 14, Seitenstücken 20 mit Perforation 21, sowie vier CDs. Verpackt, verklebt und aufgerissen wird wie zuvor; vier CD Hüllen mit CDs werden erhalten.

**Liste der Bezugszeichen** (für ein analoges Teil in den Figuren 2 und 3 dieselbe Ziffer z.B. als 2')
1 Zuschnitt
2 Befestigungsabschnitt
3 Perforation
4 erster Verpackungsabschnitt
5 Falz
6 zweiter Verpackungsabschnitt
7 Falz/Perforation
8 Endabschnitt
9 Falz
10 Lasche
11 zweiter Zuschnitt
12 Perforation
13 Fingerloch
14 Fingerloch
15 abtrennbarer Abschnitt
16 Perforation
17 Zwischenstück
18 Falz
19 CD
20 Seitenstück
21 Perforation

## Patentansprüche

1. Flacher, einstückiger Zuschnitt (1) für eine CD-Hülle, **gekennzeichnet durch**
a) einen Befestigungsabschnitt (2), daran anschließend
b) einen über eine Perforation (3) mit diesem verbundenen quadratischen, ersten Verpackungsabschnitt (4), der geringfügig größer ist als eine darauf gelegte CD, und daran anschließend
c) einen über einen Falz (5) mit diesem verbundenen quadratischen, zweiten Verpackungsabschnitt (6), der gleich groß wie der erste Verpackungsabschnitt (4) ist und dafür vorgesehen ist, dass auf ihn eine CD gelegt wird, und daran anschließend
d) einen über einen Falz/Perforation (7) mit diesem verbundenen Endabschnitt (8), wobei
e) der Befestigungsabschnitt (2), der erste Verpackungsabschnitt (4), der zweite Verpackungsabschnitt (6) und der Endabschnitt (8) in derselben Richtung (X-Achse) angeordnet sind,
f) der Endabschnitt (8) in dieser Richtung (X-Achse) kleiner oder gleich groß wie der Befestigungsabschnitt (2) ist, und
g) der zweite Verpackungsabschnitt (6) an seinen beiden anderen, einander gegenüberliegenden Seiten (in Richtung Y-Achse) je eine, über einen Falz (9) mit diesem verbundene, schmale Lasche (10) aufweist, und
h) die beiden Laschen (10) derart um den an sie angrenzenden Falz (9) umlegbar ausgebildet sind, dass sie eine auf den zweiten Verpackungsabschnitt (6) gelegte CD teilweise übergreifen und ihrerseits im umgelegten Zustand von dem darauf umzulegenden ersten Verpackungsabschnitt (4) übergriffen werden und mit diesem verklebbar ausgebildet sind, wobei
i) der Endabschnitt (8) auf den Befestigungsabschnitt (2) zu liegen kommt und mit diesem verklebbar ausgebildet ist.

2. Zuschnitt nach Anspruch 1, **dadurch gekennzeichnet, dass** er aus Papier oder Pappe (Kartonage) besteht und bedruckbar ist.

3. Zuschnitt nach Anspruch 1 oder 2, **dadurch gekennzeichnet, dass** der Zuschnitt (1) einen zweiten Zuschnitt (11) für eine zweite CD-Hülle aufweist, der dem Zuschnitt (1) in Ausgestaltung und Dimensionen gleicht und mit diesem über der mittigen X-Achse symmetrisch ist, wobei der zweite Zuschnitt (11) entsprechend dem ersten Zuschnitt (1) einen Befestigungsabschnitt (2'), einen ersten Verpackungsabschnitt (4'), einen zweiten Verpackungsabschnitt (6') und einen Endabschnitt (8') aufweist, wie im Zuschnitt (1) verbunden über Perforation (3'), Falz (5') und Falz/Perforation (7'), sowie Laschen (10') über Falze (9'), wobei die ersten Verpackungsabschnitte (4, 4') über ein Zwischenstück (17) seitlich (in Richtung Y-Achse) jeweils
über eine Perforation (12, 12') trennbar miteinander verbunden sind.

4. Zuschnitt nach Anspruch 3, **dadurch gekennzeichnet, dass** das Zwischenstück in seiner Breite (in Richtung Y-Achse) der zusammengenommenen Breite (in Richtung Y-Achse) zweier Laschen (10, 10') entspricht.

5. Zuschnitt nach Anspruch 3, **dadurch gekennzeichnet, dass** die Befestigungsabschnitte (2,2') als gemeinsamer Befestigungsabschnitt (2") ausgebildet sind, der sich einstückig über die gesamte Breite (in Richtung Y-Achse) des gesamten Zuschnitts (1, 1') erstreckt, also über die Breite des ersten Verpackungsabschnitts (4), des Zwischenstücks (17) und des ersten Verpackungsabschnitt (4'), mit diesen verbunden über Perforationen(3,3'3'').

6. Zuschnitt nach einem der Ansprüche 1 - 5, **dadurch gekennzeichnet, dass** der Zuschnitt (1) zur Aufnahme einer oder zwei weiterer CDs ausgestaltet ist, insgesamt also zur Aufnahme von drei oder vier CDs, indem anschließend an den Befestigungsabschnitt (2) in Richtung der X-Achse und damit gegenüberliegend zu einem ersten und zweiten Befestigungsabschnitt (4, 4', 6, 6') ein bzw. zwei weitere solche Verpackungsabschnitte (4, 6) vorgesehen sind, die in ihrer Ausgestaltung den gegenüberliegenden (4, 6 bzw. 4', 6') symmetrisch gleichen.

7. Zuschnitt nach einem der Ansprüche 1 - 6, **dadurch gekennzeichnet, dass** im ersten Verpackungsabschnitt (4, 4') und angrenzend an die Perforation (3, 3') ein Fingerloch (13, 13') vorgesehen ist, durch das die CD im verpackten Zustand greifbar ist.

8. Zuschnitt nach einem der Ansprüche 3 - 6, **dadurch gekennzeichnet, dass** im Zwischenstück (11) an seiner an die Laschen (10, 10') angrenzenden Seite ein Fingerloch (14) vorgesehen ist, durch das das Zwischenstück (17) im verpackten Zustand greifbar ist.

9. Zuschnitt nach einem der Ansprüche 1, 2, 5, 6, 7 oder 8, **dadurch gekennzeichnet, dass** an einer Seite (in Richtung Y-Achse) des ersten Verpackungsabschnitts (4) ein abtrennbarer Abschnitt (15) - insb. als Postkarte - vorgesehen ist, der über eine Perforation (16) mit dem Verpackungsabschnitts (4) verbunden ist.

10. Zuschnitt nach einem der Ansprüche 1 - 9, **dadurch gekennzeichnet, dass** der Befestigungsabschnitt (2, 2') zum Einbinden, Einheften oder Einlegen einer Zeitschrift ausgebildet ist.

11. Zuschnitt nach einem der Ansprüche 1 - 9, **dadurch gekennzeichnet, dass** der Befestigungsabschnitt (2, 2') in Richtung der X-Achse größer und in einen Zeitschriftenrücken einsteckbar ausgebildet und ggf. mit einem Falz (18) parallel zur Perforation (3) versehen ist, der im Zeitschriftenrücken platzierbar ist.

12. Zuschnitt nach einem der Ansprüche 1 - 9, dadurch gehennzeichnet, dass der Befestigungsabschnitt (2, 2') parallel zur Perforation (3) mit einem Falz (18) versehen ist, der im Zeitschriftenrücken platzierbar ist, wobei sich an den Befestigungsabschnitt (2, 2') symmetrisch zum ersten und zweiten Verpackungsabschnitt (4, 6 bzw. 4', 6') ein oder zwei weitere erste und zweite Verpackungsabschnitte anschließen, wobei der Falz (18) für jeweils ein Paar erste und zweite Befestigungsabschnitte (4, 4', 6, 6') eine Symmetrieachse bildet.

13. Verfahren zur Herstellung eines Zuschnitts nach einem der Ansprüche 1 - 12, **dadurch gekennzeichnet, dass** man (jeweils) eine CD (19) auf den zweiten Verpackungsabschnitt (6, 6') legt, die beiden Laschen (10, 10') über die CD (19) faltet, darauf den ersten Verpackungsabschnitt (4, 4') über die CD (19) faltet und mit den umgefalteten Laschen (10, 10') verklebt, wobei auch der Endabschnitt (8, 8') auf einen Teil des Befestigungsabschnitts (2, 2', 2") zu liegen kommt und mit diesem verklebt wird, worauf der so bestückte Zuschnitt (1) mittels des Befestigungsabschnitts (2, 2', 2") in einer Zeitschrift o. dergl. befestigt, insb. eingebunden, eingelegt oder eingeklebt wird, wobei die CD (1) sicher vor Beschädigung und Diebstahl verschlossen ist und in ihrer weiterverwendbaren Hülle über die Perforation (3, 3', 3") und Falz/Perforation (7, 7') originalverpackt herausreißbar ist.
